**Europäisches Patentamt**

**European Patent Office**

**Office européen des brevets**

(19)

(11) Veröffentlichungsnummer: **0 031 476**
**B1**

(12)

# EUROPÄISCHE PATENTSCHRIFT

(45) Veröffentlichungstag der Patentschrift:
12.03.86

(51) Int. Cl.⁴: **G 01 K 5/70**

(21) Anmeldenummer: **80107539.1**

(22) Anmeldetag: **03.12.80**

(54) **Temperaturwächter mit einer Thermobimetallschnappscheibe.**

(30) Priorität: **22.12.79 DE 2952138**

(43) Veröffentlichungstag der Anmeldung:
**08.07.81 Patentblatt 81/27**

(45) Bekanntmachung des Hinweises auf die Patenterteilung:
**12.03.86 Patentblatt 86/11**

(84) Benannte Vertragsstaaten:
**AT BE CH FR GB IT LI NL**

(56) Entgegenhaltungen:
**DE - A - 2 638 416**
**US - A - 2 966 261**
**US - A - 4 064 827**
**US - A - 4 091 763**

**Siemens-Zeitschrift 51 (1977) H. 1, 553-59**

(73) Patentinhaber: **VACUUMSCHMELZE GMBH, Grüner Weg 37 Postfach 2253, D-6450 Hanau 1 (DE)**

(72) Erfinder: **Wurmb, Alfred, Wienerwaldstrasse 2, A-3032 Eichgraben, N.Ö. (AT)**
Erfinder: **Hönig, Armin, Dipl.Phys., Niederröderstrasse 28, D-6054 Rodgau 2 (DE)**

ACTORUM AG

## Beschreibung

Die Erfindung betrifft einen Temperaturwächter mit einer Thermobimetallschnappscheibe, bei dem ein durch wenigstens ein Umschnappen der Schnappscheibe auslösbares, dieses Umschnappen anzeigendes Anzeigeelement vorgesehen ist, das sich zusammen mit der Schnappscheibe in einem gemeinsamen Gehäuse befindet. Ein derartiger Temperaturwächter ist aus der US-A-4 064 827 bekannt.

Thermobimetallschnappscheiben zeichnen sich bekanntlich dadurch aus, dass bei Temperaturänderungen ihre Wölbungsrichtung schlagartig umschnappt, wenn eine jeweils für die Scheibe charakteristische obere Schnapptemperatur $T_{os}$ überschritten bzw. eine ebenfalls für die Scheibe charakteristische untere Schnapptemperatur $T_{us}$ unterschritten wird. Bis zum jeweiligen Umschnappen der Wölbungsrichtung ändert sich die Wölbungshöhe der Schnappscheibe kontinuierlich. Die unmittelbar vor dem Umschnappen erreichte, ebenfalls für die Scheibe charakteristische Wölbungshöhe bezeichnet man als Schnapphöhe $h_s$. Unmittelbar nach dem Umschnappen und der damit verbundenen schlagartigen Änderung der Wölbungsrichtung beträgt die Wölbungshöhe $2 h_s$. Wird bei einer Temperaturänderung der die Temperaturen $T_{os}$ und $T_{us}$ enthaltende Temperaturbereich mehrfach durchlaufen, so ändern sich Wölbungshöhe und Wölbungsrichtung in einem Zyklus, der je nach Scheibentype einige $10^5$- bis $10^6$ mal völlig reproduzierbar durchlaufen werden kann. Bei den bisher bekannten Temperaturwächtern mit Thermobimetallschnappscheiben dienen die Scheiben üblicherweise zum temperaturabhängigen Öffnen oder Schliessen elektrischer Kontakte oder zur temperaturabhängigen Betätigung mechanischer Ventile oder anderer Regeleinrichtungen (vgl. z.B. «SIEMENS-Zeitschrift» 51 (1977), Heft 1, Seiten 53 bis 59). Diese bekannten Temperaturwächter dienen somit zur temperaturabhängigen Beeinflussung physikalischer oder technischer Vorgänge. Beim Durchlaufen eines Schnappzyklus ändern sie jeweils ihren Zustand, ohne dass der vorhergehende Zustand noch am Temperaturwächter oder der Schnappscheibe selbst feststellbar wäre. Allenfalls sind solche Feststellungen durch Aufzeichnung der vom Temperaturwächter ausgelösten physikalischen oder technischen Vorgänge möglich.

Aus der DE-A-2 638 416 ist ferner eine Anzeigevorrichtung zur Anzeige eines Temperaturgrenzwertes bekannt, deren Anzeigeelement beispielsweise eine im umgebenden Gehäuse drehbar gelagerte unter der Wirkung einer Drehfeder stehende Anzeigescheibe sein kann. Diese bekannte Anzeigevorrichtung verwendet allerdings zur Auslösung des Anzeigeelementes keine Schnappscheibe sondern Hubelemente. Als Hubelemente sind mit Flüssigkeit arbeitende Dehnelemente oder kleine mit einem wachsartigen Dehnstoff gefüllte Zylinder erwähnt, die durch einen Kolben verschlossen sind.

Schliesslich ist aus der US-A-4 091 763 ein Temperaturwächter bekannt, dessen Thermobimetallschnappscheibe selbst das Anzeigeelement bildet. Mit diesem Temperaturwächter kann lediglich ein Umschnappvorgang permanent angezeigt werden.

Es gibt nun Anwendungsgebiete, für die ein möglichst einfach aufgebauter Temperaturwächter von Interesse ist, an dem sich im nachhinein vorhergehende Temperaturänderungen, die zu Umschnappvorgängen geführt haben, unmittelbar ablesen lassen. Besonders nützlich wäre ein solcher Temperaturwächter beispielsweise zur Überwachung von Tiefkühl- oder Gefrierkost, wenn er dem Kühlgut beigepackt werden könnte und unzulässige Erwärmungen, also eine Unterbrechung der Gefrier- oder Tiefkühlkette, bei späterer Entnahme auch dann zuverlässig anzeigen würde, wenn das Tiefkühl- bzw. Gefriergut im Anschluss an die Erwärmung wieder auf tiefe Temperatur gebracht worden ist.

Aufgabe der Erfindung ist es, einen Temperaturwächter mit einer Thermobimetallschnappscheibe derart auszugestalten, dass sich eine Temperaturänderung oder gegebenenfalls auch mehrere Temperaturänderungen, die zu einem Umschnappen der Schnappscheibe geführt haben, auch noch nach erneutem Umschnappen der Schnappscheibe zuverlässig unmittelbar am Temperaturwächter ablesen lassen.

Die Lösung dieser Aufgabe gelingt bei einem Temperaturwächter der eingangs erwähnten Art erfindungsgemäss durch die kennzeichnenden Merkmale des Patentanspruchs 1.

Bei einem solchen Temperaturwächter wird zumindest ein Umschnappen der im Gehäuse drehbar angeordneten und mit Markierungen versehenen Schnappscheibe zuverlässig angezeigt. Dies kann beispielsweise ausreichen, wenn es nur darauf ankommt, beispielsweise die Überschreitung einer bestimmten Temperatur zuverlässig anzuzeigen, etwa bei der Überwachung von Sterilisiervorgängen.

Bei aufeinanderfolgenden Umschnappvorgängen der Schnappscheibe werden aufeinanderfolgende, gleichsinnige, schrittweise Drehungen ausgelöst, so dass sich mit Hilfe eines solchen Temperaturwächters beispielsweise auch Temperaturänderungen von Tiefkühl- oder Gefrierkost über mehrere Schnappzyklen an der jeweiligen Endstellung der mit Markierungen versehenen Schnappscheibe ablesen lassen. Zum Ablesen der Stellung der das Anzeigeelement bildenden Schnappscheibe kann beispielsweise das Gehäuse des Temperaturwächters geöffnet werden. Noch günstiger ist es jedoch, im Gehäuse ein Beobachtungsfenster vorzusehen.

Eine wegen ihres einfachen Aufbaus bevorzugte Ausführungsform eines solchen Temperaturwächters ist derart ausgestaltet, dass die Schnappscheibe an zwei einander gegenüberliegenden Stellen ihres Umfanges mit Vorsprüngen versehen ist, wobei einer dieser Vorsprünge in einem ebenen, ringförmigen Führungsschlitz geführt ist und der andere Vorsprung zwischen im wesentlichen senkrecht zur Drehrichtung gerichtete Zähne eingreift, dass die Schnappscheibe zum Zwecke der Drehung mittels einer am Gehäuse befestigten Torsionsfeder vorspannbar ist und dass Schnappscheibe und Zähne derart aufeinander abgestimmt sind, dass beim Umschnappen der Schnappscheibe der zwischen die Zähne eingreifende Vorsprung über den ihn jeweils hemmenden Zahn gehoben wird und nach entsprechender Drehung der Schnappscheibe an den nächstfolgenden Zahn anschlägt.

Dabei kann das Gehäuse vorteilhaft aus einem Bodenteil und einem Deckelteil bestehen, der Führungsschlitz im Gehäuseinneren zwischen diesen beiden Teilen verlaufen und die Zähne abwechselnd vom Bodenteil und vom Deckelteil ausgehen.

Bei einer noch einfacher aufgebauten und daher besonders vorteilhaften Variante dieser Ausführungsform besteht das Gehäuse aus zwei im wesentlichen gleichartig ausgebildeten Teilen, zwischen die ein ringförmiges Teil eingelegt ist, das den Führungsschlitz zwischen beiden Gehäuseteilen freihält und ausserdem mit den Zähnen versehen ist. Beide Gehäuseteile können vorteilhaft durch einen Bördelring zusammengehalten sein. Zusätzlich kann ein äusseres Gehäuse aus zweckmässigerweise durchsichtigem Kunststoff vorgesehen sein.

Bei Temperaturwächtern, die nicht nur einmal, sondern mehrfach eingesetzt werden sollen, ist es wichtig, dass die Schnappscheibe zurückstellbar ist. Unbefugte Manipulationen können dabei vorteilhaft dadurch verhindert werden, dass die Schnappscheibe nur bei geöffnetem Gehäuse zurückstellbar ist und dass darüber hinaus das Gehäuse gegen unbefugtes Öffnen gesichert ist. Beispielsweise kann man das Gehäuse plombieren oder in eine besonders gekennzeichnete durchsichtige Folie einschweissen.

Anhand einiger Figuren und Ausführungsbeispiele sollen die Erfindung und die mit ihr verbundenen Vorteile noch näher erläutert werden.

Fig. 1 zeigt schematisch ein Schnappdiagramm einer Thermobimetallschnappscheibe.

Fig. 2 bis 4 zeigen verschiedene Ansichten bzw. Schnitte einer bevorzugten Ausführungsform eines erfindungsgemässen Temperaturwächters.

Fig. 5 bis 7 zeigen verschiedene Ansichten bzw. Schnitte einer weiteren bevorzugten Ausführungsform eines erfindungsgemässen Temperaturwächters.

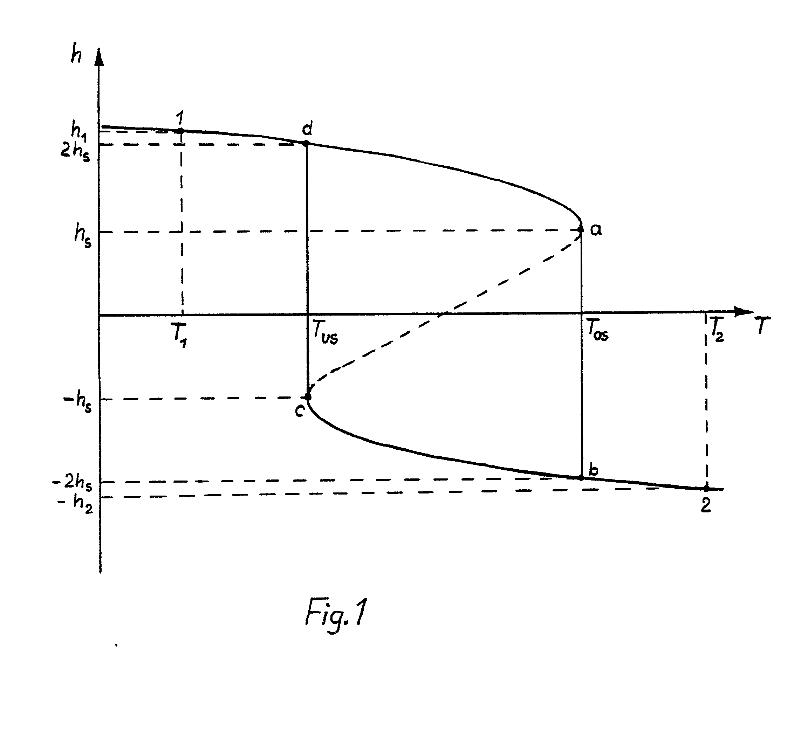

Fig. 1 dient zur näheren Erläuterung des bereits einleitend kurz geschilderten Schnappverhaltens einer Thermobimetallschnappscheibe. An der Ordinate ist die Wölbungshöhe h, an der Abszisse die Temperatur T aufgetragen. Ändert man z.B. die Temperatur von $T_1$ nach $T_2$ so verringert sich zunächst die Wölbungshöhe kontinuierlich vom Wert $h_1$, bis bei der oberen Schnapptemperatur $T_{os}$ der Wert $h_s$ erreicht wird (Punkt a). Von da schnappt die Scheibe schlagartig unter Umkehrung ihrer Wölbungsrichtung in die Position b um und die Wölbungshöhe nimmt den Wert $-2h_s$ an

und ändert sich im späteren Verlauf kontinuierlich nach $-h_2$. Durchläuft man den Temperaturbereich zwischen $T_2$ und $T_1$ in umgekehrter Richtung, so durchläuft die Schnappscheibe entsprechend die Positionen 2, b, c, d, 1. Beim Schnappen steht somit maximal ein Schnapphub von $3h_s$ zur Ausnutzung zur Verfügung. Die charakteristischen Werte $T_{os}$, $T_{us}$ und $h_s$ lassen sich durch entsprechende Wahl von Material und Abmessungen der Schnappscheiben in weiten Grenzen den jeweiligen Anforderungen anpassen.

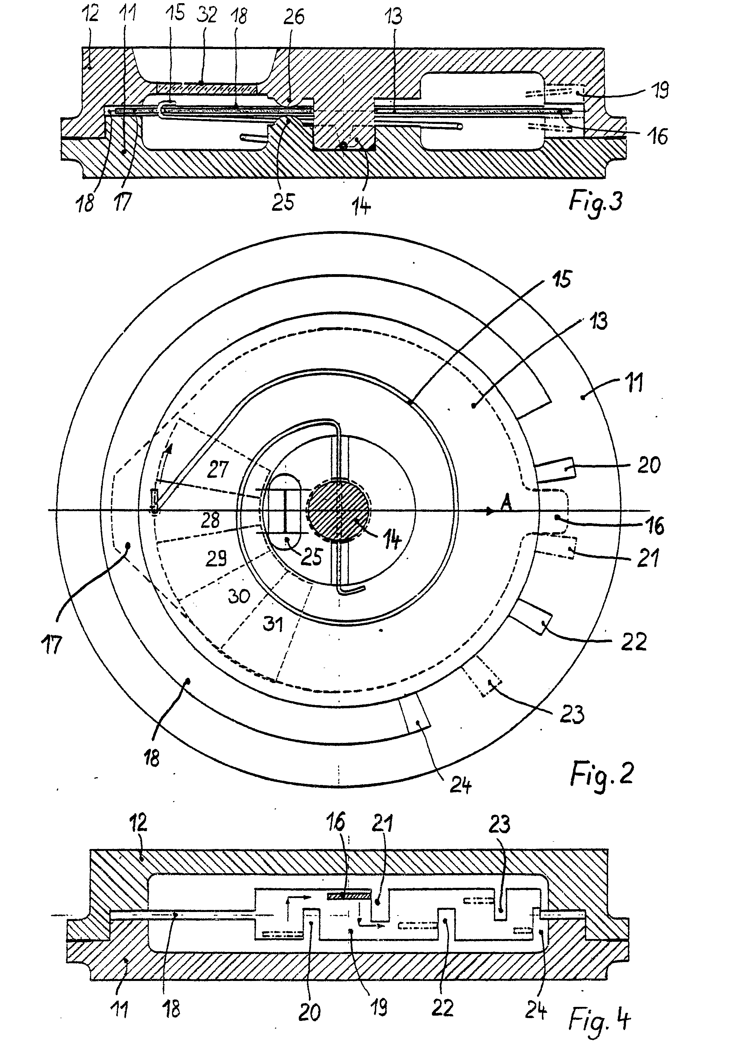

Ein Beispiel für eine Ausführungsform des erfindungsgemässen Temperaturwächters ist in Fig. 2 bis 4 dargestellt, und zwar in Fig. 2 in Draufsicht bei abgehobenem Gehäusedeckel und in Fig. 3 im Querschnitt durch die Gehäusemitte parallel zur Richtung A. Fig. 4 zeigt schliesslich eine Innenansicht des Gehäuses in Richtung A.

Das Gehäuse besteht aus einem Bodenteil 11 und einem Deckelteil 12. Zwischen beiden ist eine mit einem Mittelloch versehene Schnappscheibe 13 um einen am Deckelteil 12 vorgesehenen Zapfen 14 drehbar gelagert. Der Zapfen 14 dient gleichzeitig zur Halterung einer Torsionsfeder 15 im Gehäuse, deren freies Ende in einer Öffnung der Schnappscheibe 13 befestigt ist. Die Schnappscheibe 13 ist an einer Stelle ihres Umfangs mit einem nasenförmigen Vorsprung 16 und auf der gegenüberliegenden Seite mit einem flachen Ansatz 17 versehen. Dieser Ansatz 17 dient zur Führung der Schnappscheibe 13 in einem zwischen Bodenteil 11 und Deckelteil 12 gebildeten, entlang eines Teiles der Gehäuseinnenwand verlaufenden, ringförmigen Schlitz 18. Auf der gegenüberliegenden Seite im Bereich des nasenförmigen Vorsprungs 16 ist in der Gehäusewand ein in Drehrichtung der Schnappscheibe 13 mäanderförmig verlaufender Schlitz 19 vorgesehen. Der mäanderförmige Verlauf wird dabei durch Zähne 20 bis 24 bewirkt, die abwechselnd vom Bodenteil 11 und vom Deckelteil 12 des Gehäuses ausgehen.

Ballenförmige Auflagen 25 und 26 dienen zur zusätzlichen Lagerung der Schnappscheibe 13. Auf der Schnappscheibe 13 sind fünf sektorförmige Felder 27 bis 31 verschiedenfarbig markiert, die bei Drehung der Schnappscheibe 13 nacheinander unter ein ebenfalls sektorförmiges Fenster 32 im Deckelteil 12 gelangen und durch dieses beobachtet werden können.

Will man beispielsweise bei tiefgefrorenem Fleisch mit einer Einfriertemperatur von $-30\,°C$ und einer Lagertemperatur von $-20$ bis $-18\,°C$ die Unterbrechung der Tiefkühlung durch Überschreiten einer Temperatur von beispielsweise $-15\,°C$ überwachen, so wird man eine Schnappscheibe 13 wählen, deren untere Schnapptemperatur $T_{us}$ bei etwa $-30\,°C$ und deren obere Schnapptemperatur $T_{os}$ bei etwa $-15\,°C$ liegt. Die Höhe der Zähne 20 bis 24 ist mit dem Schnappweg des Vorsprungs 16 so abzustimmen, dass der Vorsprung beim Umschnappen über den ihn jeweils hemmenden Zahn gehoben und nach entsprechender Drehung der Schnappscheibe vom folgenden Zahn bis zum erneuten Umschnappen festgehalten wird.

Bei Raumtemperatur kann man dann die Schnappscheibe 13 mit Hilfe der Torsionsfeder 15 zum Zwecke der Drehung derart vorspannen, dass der nasenförmige Vorsprung 16 im Uhrzeigersinn vor den Zahn 20 zu liegen kommt und der Farbsektor 27 unter dem Fenster 32 erscheint. In diesem Zustand kann der Temperaturwächter bei Raumtemperatur beliebig lange gelagert und bei Bedarf jederzeit dem Gefriergut beigegeben werden.

Wenn beim Abkühlen des Gefriergutes die Temperatur $-30\,°C$ erreicht ist, schnappt dann die Wölbungsrichtung der Schnappscheibe 13 um, wobei der Vorsprung 16 über den ihn zunächst hemmenden Zahn 20 gehoben wird und sich die Schnappscheibe 13 soweit dreht, bis der Vorsprung 16 am Zahn 21 anschlägt. Bei dieser Drehung gelangt der Farbsektor 28 unter das Fenster 32. Steigt nun die Temperatur unzulässigerweise auf über $-15\,°C$ an, so schnappt die Wölbungsrichtung der Schnappscheibe 13 erneut um. Dabei wird der Vorsprung 16 über den Zahn 21 gehoben und die Schnappscheibe dreht sich bis zum Anschlag des Vorsprungs 16 an den Zahn 22, wobei der Farbsektor 29 unter das Fenster 32 gelangt. Wird nun wieder auf die Einfriertemperatur von $-30\,°C$ abgekühlt, so schnappt die Schnappscheibe 13 erneut um, wobei der Vorsprung 16 über den Zahn 22 gehoben wird, sich die Schnappscheibe 13 bis zum Anschlag des Vorsprungs 16 an den Zahn 23 dreht und der Farbsektor 30 unter das Fenster 32 gelangt. Beim erneuten Überschreiten von $-15\,°C$ wird schliesslich der Vorsprung 16 über den Zahn 23 gehoben und die Schnappscheibe dreht sich bis zum Anschlag an den Zahn 24 in ihre Endstellung, die durch den dann unter dem Fenster 32 befindlichen Farbsektor 31 angezeigt wird. Mit der in den Fig. 2 bis 4 dargestellten Ausführungsform des Temperaturwächters lassen sich demnach zwei Gefrier- und Erwärmungszyklen verfolgen. Bei Entnahme des Temperaturwächters aus dem Gefriergut lässt sich daher eine zwischenzeitliche unzulässige Erwärmung ohne weiteres feststellen. Besonders wichtig erscheint, dass der Temperaturwächter, wie oben im einzelnen erläutert, mit bei Raumtemperatur vorgespannter Schnappscheibe bei Raumtemperatur gelagert werden und dann ohne weitere Manipulation dem Gefriergut beigegeben werden kann.

Soll der Temperaturwächter nur einmal verwendet werden, so braucht die Schnappscheibe nicht rückstellbar zu sein. Das Gehäuse kann dann aus Kunststoff bestehen, der zumindest im Bereich des Fensters 32 durchsichtig ist. Bodenteil 11 und Deckelteil 12 können dann beispielsweise mittels Ultraschalls dicht miteinander verschweisst werden. Will man den Temperaturwächter mehrfach verwenden, so muss das Gehäuse wieder zu öffnen sein, damit die Schnappscheibe erneut mit Hilfe der Torsionsfeder vorgespannt werden kann. Beim Verschliessen des dann beispielsweise aus Metall oder Kunststoff bestehenden Gehäuses ist darauf zu achten, dass eine gute Abdichtung erreicht wird, damit Fremdsubstanzen nicht von aussen in den Temperaturwächter eindringen und diesen in seiner Funktionsfähigkeit beeinträchtigen können. Ausserdem sind Sicherungen gegen unbefugtes Öffnen des Gehäuses zweckmässig. Beispielsweise kann man hierzu das Gehäuse plombieren oder den ganzen Temperaturwächter in eine besonders gekennzeichnete Kunststoffolie einschweissen. Eine solche Folie kann auch dazu dienen, unerwünschte Kontakte zwischen dem Gehäusematerial des Temperaturwächters und dem umgebenden Kühlgut zu vermeiden. Gegebenenfalls kann man auch das Gehäusematerial so wählen, dass sich bei Berührung mit dem umgebenden Kühlgut keine nachteiligen Wirkungen einstellen.

Gegenüber der in den Fig. 2 bis 4 dargestellten Ausführungsform sind weitere Abwandlungen möglich. Beispielsweise kann man zur Verminderung der Reibung zwischen dem Vorsprung 16 und den Zähnen 20 bis 24 die Seitenflächen dieser Zähne abschrägen.

Ferner lassen sich die Seitenflächen des zur Führung des Ansatzes 17 dienenden Schlitzes 18 ähnlich wie die Auflagen 25 und 26 statt flach, ballig ausgestalten. Anzumerken ist noch, dass in den Fig. 2 bis 4 die Schnappwege, d.h. die Höhe der Zähne 20 bis 24 aus Gründen der klareren Darstellung weit überhöht dargestellt sind. Tatsächlich steht bei einer üblichen Schnappscheibe von etwa 20 mm Durchmesser bei der in Fig. 2 bis 4 dargestellten Art der Lagerung der Scheibe und einer Temperaturdifferenz zwischen $T_{os}$ und $T_{us}$ von $15\,°C$ für den Vorsprung 16 ein Schnappweg von etwa 1,5 mm zur Verfügung.

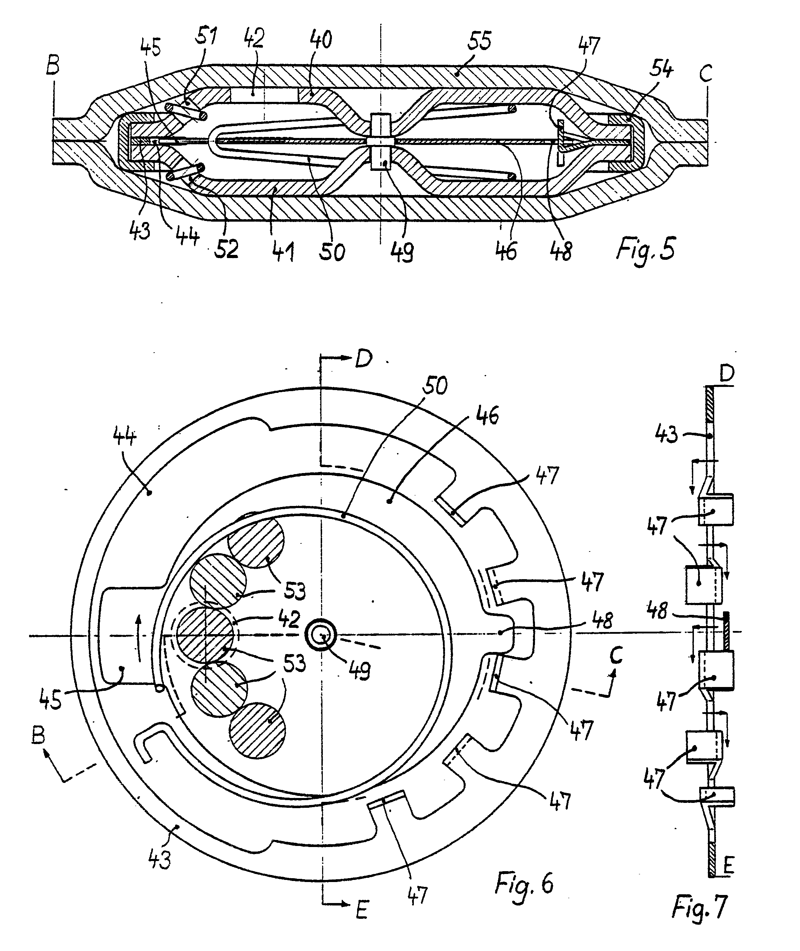

Eine weitere vorteilhafte Ausführungsform des erfindungsgemässen Temperaturwächters ist in den Fig. 5 bis 7 dargestellt, und zwar zeigt Fig. 5 den Temperaturwächter im Schnitt, Fig. 6 die Schnappscheibe und die zu ihrer Führung wesentlichen Teile in Draufsicht und Fig. 7 einen Schnitt durch ein mit Zähnen versehenes ringförmiges Teil.

Das innere Gehäuse des Temperaturwächters besteht aus zwei im wesentlichen gleichartig ausgebildeten, deckelförmigen Teilen 40 und 41, die sich lediglich dadurch unterscheiden, dass das Teil 40 zusätzlich ein Fenster 42 enthält. Zwischen den beiden Teilen 40 und 41 ist ein ringförmiges Teil 43 angeordnet, das sowohl einen Führungsschlitz 44 für einen Vorsprung 45 der Schnappscheibe 46 freihält, als auch auf der gegenüberliegenden Seite mit Zähnen 47 versehen ist, in die ein anderer Vorsprung 48 der Schnappscheibe 46 eingreift. Die Schnappscheibe 46 ist um einen in einer Mitteleinbuchtung der Gehäuseteile 40 und 41 angeordneten Lagerzapfen 49 drehbar und kann zum Zwecke der Drehung mittels einer Feder 50 vorgespannt werden. Die Feder 50 ist in Öffnungen 51 und 52 der Gehäuseteile 40 und 41 verankert und greift an dem im Führungsschlitz 44 geführten Vorsprung 45 der Schnappscheibe 46 an. Die Schnappscheibe 46 selbst ist mit Farbmarkierungen 53 versehen, die bei einer Drehung der Schnappscheibe 46 nacheinander im Fenster 42 sichtbar werden und den jeweiligen Zustand des Temperaturwächters anzeigen. Die Gehäuseteile 40 und 41 werden durch einen Bördelring 54 zusammengehalten. Ferner ist ein äusseres Gehäuse 55 aus durchsichtigem Kunststoff vorgesehen. Die beiden Teile dieses Gehäuses 55 können am Rand beispielsweise mittels Ultraschalls dicht miteinander verschweisst werden. Die Teile 40, 41, 43 und 54 können vorteilhaft aus Blech gefertigt sein.

Die Funktion des Temperaturwächters bei Temperaturänderungen ist praktisch die gleiche wie die des in den Fig. 2 bis 4 dargestellten Temperaturwächters und braucht daher nicht nochmals erläutert zu werden. Auch in den Fig. 5 und 7 sind die Zähne 47, in die der Vorsprung 48 der Schnappscheibe 46 eingreift, wiederum stark überhöht gezeichnet. Ferner ist noch anzumerken, dass in den Fig. 3 und 5 die Schnappscheiben 13 bzw. 46 der Einfachheit halber flach, also in einer an sich nicht stabilen Mittellage, dargestellt sind.

Ausser bei Tiefgefrier- und Gefrierkost lassen sich die erfindungsgemässen Temperaturwächter auch zur Temperaturüberwachung in anderen Temperaturbereichen einsetzen.

Beispiele hierfür sind die Überwachung der Lagertemperatur bei der gekühlten Lagerung von Chemikalien, Pharmazeutika, Impfstoffen u.ä. Wie bereits kurz angedeutet, lässt sich der Temperaturwächter auch zur Überwachung hoher Temperaturen anwenden, beispielsweise zur Kontrolle, ob in zu sterilisierendem Gut die Sterilisationstemperatur tatsächlich erreicht wurde. Für die unterschiedlichen Anwendungszwecke sind dann jeweils Bimetallschnappscheiben mit entsprechenden charakteristischen Werten auszuwählen. Auch die Anzahl der am Temperaturwächter ablesbaren Schnappzyklen kann den jeweiligen speziellen Bedürfnissen angepasst werden.

## Patentansprüche

1. Temperaturwächter mit einer Thermobimetallschnappscheibe (13; 46), bei dem ein durch wenigstens ein Umschnappen der Schnappscheibe (13; 46) auslösbares, dieses Umschnappen anzeigendes Anzeigeelement vorgesehen ist, das sich zusammen mit der Schnappscheibe (13; 46) in einem gemeinsamen Gehäuse befindet, dadurch gekennzeichnet, dass das Anzeigeelement nach jedem Umschnappen der Schnappscheibe (13; 46) je einen Drehschritt in einer festgelegten Drehrichtung ausführt und dass die mit Markierungen (27 bis 31; 53) versehene Schnappscheibe (13; 46) selbst das Anzeigeelement bildet.

2. Temperaturwächter nach Anspruch 1, dadurch gekennzeichnet, dass im Gehäuse ein Beobachtungsfenster (32) vorgesehen ist.

3. Temperaturwächter nach Anspruch 1 oder 2, dadurch gekennzeichnet, dass die Schnappscheibe (13) an zwei einander gegenüberliegenden Stellen ihres Umfanges mit Vorsprüngen (16, 17) versehen ist, wobei einer dieser Vorsprünge (17) in einem ebenen, ringförmigen Führungsschlitz (18) geführt ist und der andere Vorsprung (16) zwischen im wesentlichen senkrecht zur Drehrichtung gerichtete Zähne (20 bis 24) eingreift, dass die Schnappscheibe (13) zum Zwecke der Drehung mittels einer am Gehäuse befestigten Torsionsfeder (15) vorspannbar ist und dass Schnappscheibe (13) und Zähne (20 bis 24) derart aufeinander abgestimmt sind, dass beim Umschnappen der Schnappscheibe (13) der zwischen die Zähne (20 bis 24) eingreifende Vorsprung (16) über den ihn jeweils hemmenden Zahn (21) gehoben wird und nach entsprechender Drehung der Schnappscheibe (13) an den nächstfolgenden Zahn (22) anschlägt.

4. Temperaturwächter nach Anspruch 3, dadurch gekennzeichnet, dass das Gehäuse aus einem Bodenteil (11) und einem Deckelteil (12) besteht, dass der Führungsschlitz (18) im Gehäuseinneren zwischen beiden Gehäuseteilen (11, 12) verläuft und dass die Zähne (20 bis 24) abwechselnd vom Bodenteil (11) und vom Deckelteil (12) ausgehen.

5. Temperaturwächter nach Anspruch 3, dadurch gekennzeichnet, dass das Gehäuse aus zwei im wesentlichen gleichartig ausgebildeten Teilen (40, 41) besteht, zwischen die ein ringförmiges Teil (43) eingelegt ist, das den Führungsschlitz (44) zwischen beiden Gehäuseteilen (40, 41) freihält und ausserdem mit den Zähnen (47) versehen ist.

6. Temperaturwächter nach Anspruch 5, dadurch gekennzeichnet, dass die Gehäuseteile (40, 41) durch einen Bördelring (54) zusammengehalten sind.

7. Temperaturwächter nach einem der Ansprüche 5 und 6, dadurch gekennzeichnet, dass zusätzlich ein äusseres Gehäuse (55) aus Kunststoff vorgesehen ist.

8. Temperaturwächter nach einem der Ansprüche 1 bis 7, dadurch gekennzeichnet, dass die Schnappscheibe (13; 46) nur bei geöffnetem Gehäuse zurückstellbar ist.

9. Temperaturwächter nach Anspruch 8, dadurch gekennzeichnet, dass das Gehäuse gegen unbefugtes Öffnen gesichert ist.

## Claims

1. A temperature controller having a thermo-bimetallic snap disc (13, 46), in which is arranged an indicating element which can be triggered by at least one snap-over action of the snap disc (13, 46) to indicate this snap-over action and which, together with the snap disc (13, 46), is arranged in a common housing, characterised in that after each snap-over action of the snap disc (13, 46), the indicating element in each case carries out a rotation step in a predetermined direction of rotation; and that the snap disc (13, 46) which is provided with markings (27 to 31, 53), itself forms the indicating element.

2. A temperature controller as claimed in Claim 1, characterised in that an observation window (32) is arranged in the housing.

3. A temperature controller as claimed in Claim 1 or Claim 2, characterised in that on two oppositely disposed points of its periphery, the snap disc (13) is provided with projections (16, 17), one of said projections (17) being guided in a flat, annular guide slot (18) and the other projection (16) engages between teeth (20 to 24) which are directed substantially at right angles to the direction of rotation; that for the purpose of rotation, the snap disc (13) can be prestressed by means of a torsion spring (15) which is secured to the housing; and that the snap disc (13) and the teeth (20 to 24) are so adapted to one another that, during snap-over of the snap disc (13), the projection (16) which engages between the teeth (20 to 24) is lifted over the tooth (21) which obstructs the projection and abuts against the following tooth (22) after a corresponding rotation of the snap disc (13).

4. A temperature controller as claimed in Claim 3, characterised in that the housing consists of a base part (11) and a cover part (12); that the guide slot (18) extends in the interior of the housing between the two housing part (11, 12); and that the teeth (20 to 24) alternately originate from the base part (11) and the cover part (12).

5. A temperature controller as claimed in Claim 3, characterised in that the housing consists of two essentially similar parts (40, 41) between which an annular part (43) is inserted which keeps free the guide slot (44) between the two housing components (40, 41) and is moreover provided with teeth (47).

6. A temperature controller as claimed in Claim 5, characterised in that the housing parts (40, 41) are held together by a flanged ring (54).

7. A temperature controller as claimed in one of Claims 5 and 6, characterised in that an external housing (55) made of synthetic resin is additionally provided.

8. A temperature controller as claimed in one of Claims 1 to 7, characterised in that the snap disc (13, 46) can only be reset when the housing is open.

9. A temperature controller as claimed in Claim 8, characterised in that the housing is secured against unauthorised opening.

**Revendications**

1. Dispositif de contrôle de température ayant un disque à commutation à déclic thermique, bimétallique (13, 46) qui comporte un élément d'affichage qui est déclenché par au moins une commutation à déclic du disque à déclic (13, 46) pour afficher cette commutation à déclic, et qui est réuni dans un boîtier commun avec le disque à déclic (13, 46), caractérisé en ce que l'élément d'affichage effectue chaque fois un pas de rotation dans une direction de rotation déterminée pour chaque commutation à déclic du disque à déclic (13, 46) et le disque à déclic muni de repères (27 à 31, 53) forme lui-même un élément d'affichage (13, 46).

2. Dispositif de contrôle de température selon la revendication 1, caractérisé en ce qu'une fenêtre d'observation (32) est prévue dans le boîtier.

3. Dispositif de contrôle de température selon l'une des revendications 1 ou 2, caractérisé en ce que le disque à déclic (13) comporte des parties en saillie (16, 17) à au moins deux endroits opposés de sa périphérie, l'une de ces parties en saillie (17) étant guidée dans une fente de guidage (18) plane, annulaire, et l'autre partie en saillie (16) venant prendre entre des dents (20–24) dirigées de façon essentiellement perpendiculaire à la direction de rotation, en ce que le disque à déclic (13) peut être précontraint par un ressort de torsion (15) fixé au boîtier pour assurer la rotation et en ce que le disque à déclic (13) et les dents (20...24) sont déterminés réciproquement pour que, lors de la commutation à déclic du disque à déclic (13), la partie en saillie (16) prise entre les dents (20...24) soit soulevée par-dessus la dent (21) qui bloquait et qu'après une rotation correspondante du disque à déclic (13), elle bute contre la dent (22) suivante.

4. Dispositif de contrôle de température selon la revendication 3, caractérisé en ce que le boîtier se compose d'un fond (11) et d'un couvercle (12), en ce que la fente de guidage (18) passe à l'intérieur du boîtier entre les deux parties de boîtier (11, 12) et en ce que les dents (20...24) sont en saillie en alternance par rapport au fond (11) et au couvercle (12).

5. Dispositif de contrôle de température selon la revendication 3, caractérisé en ce que le boîtier se compose de deux parties (40, 41) réalisées essentiellement identiques, et entre lesquelles est disposée une partie annulaire (43) qui maintient libre la fente de guidage (44) entre les deux parties de boîtier (40, 41) et comportant en outre des dents (47).

6. Dispositif de contrôle de température selon la revendication 5, caractérisé en ce que les parties de boîtier (40, 41) sont maintenues réunies par une bague périphérique (54).

7. Dispositif de contrôle de température selon l'une des revendications 5 et 6, caractérisé en ce qu'en outre il est prévu un boîtier extérieur (55) en matière synthétique.

8. Dispositif de contrôle de température selon l'une des revendications 1 à 7, caractérisé en ce que le disque à déclic (13, 46) ne peut être remis en arrière que lorsque le boîtier est ouvert.

9. Dispositif de contrôle de température selon la revendication 8, caractérisé en ce que le boîtier est protégé contre une ouverture non autorisée.

Fig. 1

Fig.3

Fig. 2

Fig. 4

Fig. 5

Fig. 6

Fig. 7